# EUROPEAN PATENT APPLICATION

(11) **EP 4 102 392 A1**
(43) Date of publication of application: **14.12.2022**
(21) Application number: 21178138.0
(22) Date of filing: 08.06.2021
(51) Int. Cl.: G06F 30/20, G06F 111/10

(54) **SYSTEMS AND METHODS FOR FACILITATING THE OPERATION OF THE POWER DRIVE SYSTEMS AND THEIR SIMULATION MODELS**

(71) Applicant: Siemens Aktiengesellschaft, 80333 München (DE)
(72) Inventor: Leipold, Michael, 90491 Nürnberg (DE); Neugebauer, Christian, 90419 Nürnberg (DE)

(57) **Abstract**

A system comprising a memory that stores machine-executable components, a processor that is operatively coupled to the memory, and is configured to execute the machine-executable components, wherein the machine-executable components comprise an automation engineering tool (11) designed to configure a power drive system (21, 22, 23), a dynamic simulation model (24) of the power drive system (21, 22, 23), wherein the dynamic simulation model (24) comprises a physic model and functional and/or logical model of the power drive system (21, 22, 23), and an analytics model component (30), wherein the automation engineering tool (1) is further designed to configure and to commission the dynamic simulation model (24), the dynamic simulation model (24) is configured to generate a simulation data (25, 26, 27) at a predetermined sampling rate, wherein the simulation data is associated with at least one parameter of the power drive system (21, 22, 23), the analytics model component (30) is configured to receive the simulation data (25, 26, 27), to generate an optimization data (40) based on the simulation data (25, 26, 27) and to provide the optimization data (40) to the automation engineering tool (11) to optimize the operation of the power drive system (21, 22, 23) and/or to the dynamic simulation model (24) to improve the simulation of the power drive system (21, 22, 23).

## Description

The subject matter disclosed herein relates to systems and methods for facilitating the operation of the power drive systems and their simulation models.

Moreover, the subject matter disclosed herein relates to a computer program and to a computer readable medium comprising such computer program.

In order to obtain a comprehensive virtual representation (digital twin) resembling the corresponding real power drive system (for example according to IEC 61800-9) not only static attributes but also dynamic behavior is to be represented throughout the complete life cycle.

To be able to provide true value add integration of all tools involved is paramount to allow for ease of use and a comprehensive user experience, for both the real and the virtual product as well. User should not be forced to use different tools throughout the life cycle regardless of the drive system component in focus.

Therefore, there is a need for a comprehensive solution that facilitates the operation of the power drive system and its simulation model.

The above-mentioned need is satisfied by providing a system comprising a memory that stores machine-executable components, a processor that is operatively coupled to the memory, and is configured to execute the machine-executable components, wherein the machine-executable components comprise an automation engineering tool designed to configure a power drive system, a dynamic simulation model of the power drive system, wherein the dynamic simulation model comprises a physic model and functional and/or logical model of the power drive system, and an analytics model component, wherein the automation engineering tool is further designed to configure and to commission the dynamic simulation model, the dynamic simulation model is configured to generate a simulation data at a predetermined sampling rate, wherein the simulation data is associated with at least one parameter of the power drive system, the analytics model component is configured to receive the simulation data, to generate an optimization data based on the simulation data and to provide the optimization data to the automation engineering tool to optimize the operation of the power drive system and/or to the dynamic simulation model (to improve the simulation of the power drive system.

In an embodiment, the dynamic simulation model can be configured to generate the simulation data in form of data packets, wherein each data packet comprises the simulation data accumulated over a time interval of a predetermined time length, or to generate the simulation data continuously in form of a data stream.

In an embodiment, the automation engineering tool can comprise a virtual operator panel of a controller of the power drive system to allow to configure the dynamic simulation model.

In an embodiment, the machine-executable components can comprise a model editor for configuring of the dynamic simulation model, in particular the physic model of the dynamic simulation model.

In an embodiment, the model editor can comprise a web interface.

In an embodiment, the predetermined sampling rate is limited by a granularity of the dynamic simulation model, in particular only by the granularity of the dynamic simulation model. In an embodiment, the analytics model component can comprise a monitoring component configured to process the simulation data by applying at least one data analytics model.

In an embodiment, the monitoring component can be configured to visualize results of processing of the simulation data.

In an embodiment, the analytics model component comprises a model-teaching component configured to, based on the simulation data, identify patterns and/or anomalies in the behavior (for example in the simulation) of the dynamic simulation model and utilize defined patterns and/or anomalies to improve/teach the dynamic simulation model.

In an embodiment, the analytics model component can comprise a model-teaching component configured to
- receive data associated with monitoring of the power drive system,
- based on the received data, identify patterns and/or anomalies in the behavior of the power drive system, and
- utilize defined patterns and/or anomalies to improve/teach the dynamic simulation model.

In an embodiment, the automation engineering tool can be designed to define an automation topology.

The above-mentioned need is also satisfied by providing a computer-implemented method for optimizing an operation of a power drive system and/or for improving a simulation of the power drive system, wherein the method comprises:
S1: configuring, at an automation engineering tool, the power drive system and/or a dynamic simulation model, wherein the dynamic simulation model comprises a physic model and functional and/or logical model of the power drive system,
S2: commissioning, at the automation engineering tool, the dynamic simulation model, wherein the dynamic simulation model generates a simulation data at a predetermined sampling rate, wherein the simulation data is associated with at least one parameter of the power drive system,
S3: receiving, at an analytics model component, the simulation data,
S4: generate, at an analytics model component, an optimization data based on the simulation data,
S5: providing the optimization data to the automation engineering tool for optimizing the operation of the power drive system and/or for improving the simulation of the power drive system based on the optimization data.

The need is also satisfied by a computer program comprising instructions which, when the computer program is executed by a computing system, in particular by the system described above, cause the computing system to carry out the method described above.

A computer readable medium comprising such computer program and/or the optimization data described above is also disclosed.

The above and other objects and advantages of the invention will be apparent upon consideration of the following detailed description of certain aspects indicating only a few possible ways which can be practiced. The description is taken in conjunction with the accompanying drawing, in which like reference characters refer to like parts throughout, and in which:

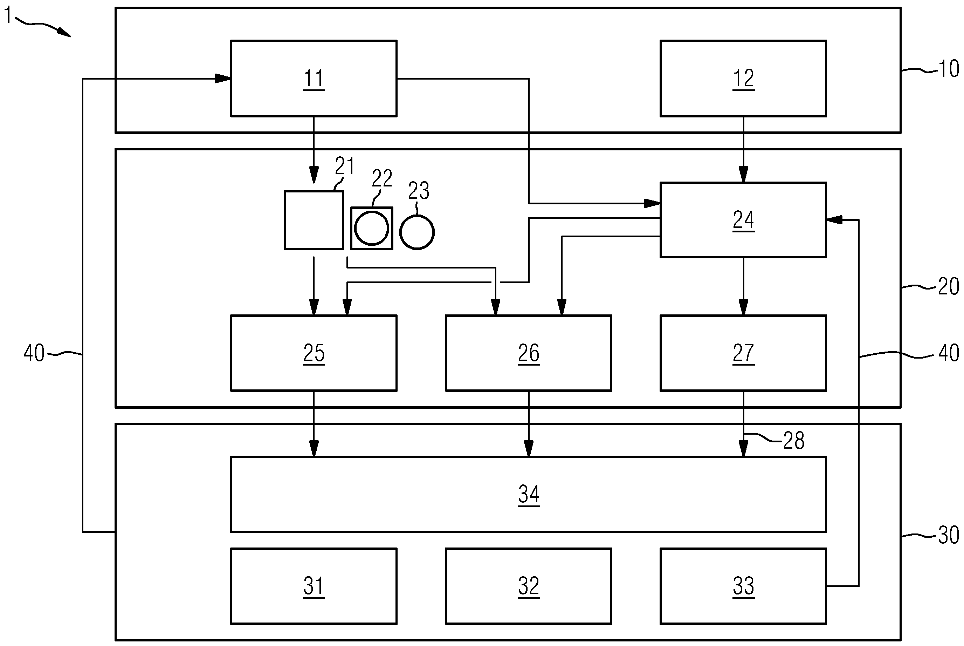

FIG 1 shows a system for facilitating the operation of a power drive system.

FIG 1 illustrates a system 1 that comprises a memory storing machine-executable components and a processor that is operatively coupled to the memory and is configured to execute the machine-executable components.

The machine-executable components comprise an automation engineering tool 11. The automation engineering tool 11 is designed to configure at least one power drive system 21, 22, 23. The power drive system 21, 22, 23 is usually a part of an automation system, which is designed to automate an industrial plant, e.g. a production line or manufacturing plant. Moreover, the automation engineering tool 11 can be designed to configure to define an automation topology of the automation system.

The power drive system 21, 22, 23 (PDS) is usually a mains-powered electrical drive system comprising one or more complete drive modules 21 and one or more motors 22. Each motor 22 can comprise one or more sensors, which can be coupled, e.g. mechanically coupled to the motor shaft. The mechanism or driven load 23 that is driven by the motor is usually not a part of the power drive system.

The complete drive module 21 (CDM) usually comprises a so-called Basic Drive Module (BDM) and possible accessories / auxiliaries, for example a power supply module, protection devices, fans, etc.

The BDM usually, for example according to DIN IEC 61800, comprises an inverter/converter module including a control for the associated power semiconductors as well as the drive-specific control and regulation for speed, torque, current, frequency or voltage. It is located between the supply network and the motor and can transmit energy in both directions. The BDM can also comprise self-protection functions.

The machine-executable components also comprise a dynamic simulation model 24 - also called "digital twin" - of the power drive system 21, 22, 23. If there are is plurality of the power drive systems 21, 22, 23, which is quite often the case for automation systems for manufacturing plants and/or production lines, there can be a dynamic simulation model 24 for each power drive system 21, 22, 23.

The dynamic simulation model 24 comprises a physic or physics-based model and functional and/or logical model of the power drive system 21, 22, 23.

It is important to note that the power drive system 21, 22, 23 can be a real, physical power drive system or its virtual representation, for example a replacement or spare circuit diagram of the power drive system. In case of the real power drive system the system 1 can be seen as a HiL (Hardware-in-the-Loop) simulation. If the real power drive system 21, 22, 23 is a virtual representation of the real power drive system, the system 1 can be seen as a MiL (Model-in-the-Loop) or as a SiL (Software-in-the-Loop) Simulation.

The automation engineering tool 11 is further configured to allow to configure and to commission the dynamic simulation model 24. After commissioning the dynamic simulation model 24 simulates the power drive system 21, 22, 23.

The machine-executable components can also comprise a model editor 12 for configuring of the dynamic simulation model 24, in particular the physic model of the dynamic simulation model 24. This allows for an in-depth configuration of the dynamic simulation model 24.

In an embodiment, the model editor 12 can be a part of the automation engineering tool 11.

The model editor 12 can comprise a web interface or can be designed as a web interface.

The automation engineering tool 11 and the model editor component 12 can form a configuration layer 10 of the system 1.

In an embodiment, the automation engineering tool 11 can comprise a virtual operator panel of a controller of the power drive system 21, 22, 23 to allow the configuring of the dynamic simulation model 24.

The dynamic simulation model 24 is configured to generate a simulation data 25, 26, 27. The generation of the simulation data is done during dynamic simulation model's execution. A sampling rate at which the simulation data is generated can be predetermined. For example, the sampling rate can be set up at the automation engineering tool 11. The simulation data is associated with at least one parameter of the power drive system 21, 22, 23. The parameters can be one or several of rotation speed (of a motor), torque, current, frequency, voltage, or temperature.

The predetermined sampling rate is limited (only) by a granularity of the dynamic simulation model 24. This allows for significantly more detailed simulation data comparing to the data that can be provided by the real power drive systems.

In an embodiment, the dynamic simulation model 24 can be configured to generate the simulation data 25, 26, 27 in form of data packets, wherein each data packet can comprise the simulation data accumulated over a time interval of a predetermined time length, or to generate the simulation data continuously in form of a data stream. The length of the time interval can be chosen at the automation engineering tool 11 and/or at the model editor component 12.

In summary, the simulation data can be generated to capture one or more pre-selected drive parameters (transient and undeviating values) in a pre-determined sampling rate and, for example, saving them to a file storage for further processing or providing a continuous stream of these to a connected computational device. The simulation data can, therefore, be designed as trace files 25, continuous tracing 26, or, when the sampling rate exceeds a sampling rate that is (physically) possible for real power drive systems, as detailed snapshot files or detailed stream file 27.

The real power drive systems can also provide data in form of trace files or continuously in order to capture selected drive parameters (transient and undeviating values) in a sampling rate which is limited to the drives internal cycle rate.

The power drive system 21, 22, 23, the dynamic simulation model 24 and the simulation data 25, 26, 27 build an operation layer of the system 1.

Furthermore, the system 1 comprises an analytics model component 30 or an analytics layer.

It will be appreciated by the skilled person that the system 1 comprises corresponding interfaces between the machine-executable components and/or layers 10, 20, 30 described herein for transferring information forth between the components and/or the layers.

The analytics model component 30 may comprise one or more subcomponents and/or data analytics models and is configured to receive 28 the simulation data 25, 26, 27 from the operation layer 20.

In an embodiment, the analytics model component 30 can comprise a software adaptor 34 to read the simulation data 25, 26, 27, for example the data stream 26, 27 and forward it to respective recipients 31, 32, 33 within the analytics model component 30.

Based on the simulation data 25, 26, 27 the analytics model component 30 generates an optimization data 40 and provides the optimization data 40 to the automation engineering tool 11 for optimizing the operation of the power drive system 21, 22, 23 and/or to the dynamic simulation model 24 to improve the simulation of the power drive system 21, 22, 23.

In an embodiment the analytics model component comprises a monitoring component 31 which is configured (in order to provide the optimization data 40) to process the simulation data 25, 26, 27, for example in form of trace files from a real power drive system and/or from the dynamic simulation model 24 by applying at least one data analytics model and to provide 40 the optimization data to the automation engineering tool 11.

In an embodiment, the monitoring component 11 can be configured to visualize results of processing of the simulation data.

In an embodiment, the analytics model component 30 can comprise a model-teaching component 33 configured to identify, based on the simulation data 25, 26, 27, patterns and/or anomalies in the behavior (simulation) of the dynamic simulation model 24 and to utilize 40 defined patterns and/or anomalies to improve and/or teach the dynamic simulation model 24.

In an embodiment, the model-teaching component 33 can be configured to receive data associated with monitoring of the (for example real) power drive system 21, 22, 23, to identify, based on the received data, patterns and/or anomalies in the behavior of the power drive system 21, 22, 23, and to utilize 40 defined patterns and/or anomalies to improve/teach the dynamic simulation model 24.

In an embodiment, the analytics model component 30 can comprise a preemptive simulation module 32 that allows a simulation of drive system application with an advanced timely offset to identify anomalies in drive system operations before they occur. This allows for low-latency reactions to possible anomalies.

In summary, the present disclosure provides a comprehensive and integrative solution throughout the machine's life cycle from engineering through operations to service and analytics. By actively integrating IIoT (Industrial Internet of Things) and virtualization do-mains of digitalization added value for machine operators and machine builders alike is generated.

The systems and methods described herein can be also applied to all relevant automation instances (like PLCs) hence allowing users to address their requirements with an universal approach.

The above-described embodiments of the present disclosure are presented for purposes of illustration and not of limitation. In particular, the embodiments described with regard to figures are only few examples of the embodiments described in the introductory part. Technical features that are described with regard to systems can be applied to augment methods disclosed herein and vice versa.

## Claims

1. A system comprising:
a memory that stores machine-executable components,
a processor that is operatively coupled to the memory, and is configured to execute the machine-executable components, wherein the machine-executable components comprise
- an automation engineering tool (11) designed to configure a power drive system (21, 22, 23),
- a dynamic simulation model (24) of the power drive system (21, 22, 23), wherein the dynamic simulation model (24) comprises a physic model and functional and/or logical model of the power drive system (21, 22, 23), and
- an analytics model component (30), wherein
the automation engineering tool (11) is further designed to configure and to commission the dynamic simulation model (24),
the dynamic simulation model (24) is configured to generate a simulation data (25, 26, 27) at a predetermined sampling rate, wherein the simulation data is associated with at least one parameter of the power drive system (21, 22, 23),
the analytics model component (30) is configured to receive the simulation data (25, 26, 27), to generate an optimization data (40) based on the simulation data (25, 26, 27) and to provide the optimization data (40) to the automation engineering tool (11) to optimize the operation of the power drive system (21, 22, 23) and/or to the dynamic simulation model (24) to improve the simulation of the power drive system (21, 22, 23).

2. System of claim 1, wherein the dynamic simulation model (24) is configured to generate the simulation data (25, 26, 27) in form of data packets, wherein each data packet comprises the simulation data accumulated over a time interval of a predetermined time length, or to generate the simulation data continuously in form of a data stream.

3. System of claim 1 or 2, wherein the automation engineering tool (11) comprises a virtual operator panel of a controller of the power drive system (21, 22, 23) to allow to configure the dynamic simulation model (24).

4. System of any one of claims 1 to 3, wherein the machine-executable components comprise a model editor (12) for configuring of the dynamic simulation model (24), in particular the physic model of the dynamic simulation model (24).

5. System of claim 4, wherein the model editor (12) comprises a web interface.

6. System of any one of claims 1 to 5, wherein the predetermined sampling rate is limited by a granularity of the dynamic simulation model (24).

7. System of any one of claims 1 to 6, wherein the analytics model component (30) comprises a monitoring component (31) configured to process the simulation data (25, 26, 27) by applying at least one data analytics model.

8. System of claim 7, wherein the monitoring component (11) is configured to visualize results of processing of the simulation data.

9. System of any one of claims 1 to 8, wherein the analytics model component (30) comprises a model-teaching component (33) configured to, based on the simulation data (25, 26, 27), identify patterns and/or anomalies in the behavior of the dynamic simulation model (24) and utilize defined patterns and/or anomalies to improve/teach the dynamic simulation model (24).

10. System of any one of claims 1 to 9, wherein the analytics model component (30) comprises a model-teaching component (33) configured to
- receive data associated with monitoring of the power drive system (21, 22, 23),
- based on the received data, identify patterns and/or anomalies in the behavior of the power drive system (21, 22, 23), and
- utilize defined patterns and/or anomalies to improve/ teach the dynamic simulation model (24).

11. System of any one of claims 1 to 10, wherein the automation engineering tool (11) is designed to define an automation topology.

12. Computer-implemented method for optimizing an operation of a power drive system (21, 22, 23) and/or for improving a simulation of the power drive system (21, 22, 23), wherein the method comprises:
S1: configuring, at an automation engineering tool (11), the power drive system (21, 22, 23) and/or a dynamic simulation model (24), wherein the dynamic simulation model (24) comprises a physic model and functional and/or logical model of the power drive system (21, 22, 23),
S2: commissioning, at the automation engineering tool (11), the dynamic simulation model (24), wherein the dynamic simulation model (24) generates a simulation data (25, 26, 27) at a predetermined sampling rate, wherein the simulation data is associated with at least one parameter of the power drive system (21, 22, 23),
S3: receiving, at an analytics model component (30), the simulation data (25, 26, 27),
S4: generate, at an analytics model component (30), an optimization data (40) based on the simulation data (25, 26, 27),
S5: providing the optimization data (40) to the automation engineering tool (11) for optimizing the operation of the power drive system (21, 22, 23) and/or for improving the simulation of the power drive system (21, 22, 23) based on the optimization data (40).

13. A computer program comprising instructions which, when the computer program is executed by a computing system, in particular by a system of any one of claims 1 to 11, cause the computing system to carry out a method of Claim 12.

14. A computer readable medium comprising a computer program of claim 13.

15. A computer readable medium comprising an optimization data (40) provided in step S5 of a method of claim 12.
